(19) Europäisches Patentamt / European Patent Office / Office européen des brevets

(11) **EP 1 222 781 B1**

(12) **EUROPEAN PATENT SPECIFICATION**

| | |
|---|---|
| (45) Date of publication and mention of the grant of the patent: **27.06.2007 Bulletin 2007/26** | (51) Int Cl.: **H04L 12/56** (2006.01) |
| | (86) International application number: **PCT/US2000/028647** |
| (21) Application number: **00973579.6** | |
| (22) Date of filing: **16.10.2000** | (87) International publication number: **WO 2001/030033 (26.04.2001 Gazette 2001/17)** |

(54) **METHOD AND APPARATUS FOR MARKING DATA PACKETS IN A DIFFERENTIATED SERVICES NETWORK**

VERFAHREN UND VORRICHTUNG FÜR DIE ZUFALLSMARKIERUNG VON PAKETEN IN EINEM NETZWERK MIT DIFFERENZIERTEN DIENSTEN

PROCEDE ET APPAREIL DE MARQUAGE DE PAQUETS DE DONNEES DANS UN RESEAU DE SERVICES DIFFERENCIES

(84) Designated Contracting States:
**DE FR GB IT**

(30) Priority: **15.10.1999 US 159522 P**
**31.03.2000 US 540361**

(43) Date of publication of application:
**17.07.2002 Bulletin 2002/29**

(73) Proprietor: **Nokia Inc.**
**Irving, TX 75039 (US)**

(72) Inventor: **KOODLI, Rajeev**
**Sunnyvale, CA 94089 (US)**

(74) Representative: **Read, Matthew Charles et al**
**Venner Shipley LLP**
**20 Little Britain**
**London EC1A 7DH (GB)**

(56) References cited:
• **FENG W -C ET AL: "ADAPTIVE PACKET MARKING FOR MAINTAINING END-TO-END THROUGHPUT IN A DIFFERENTIATED-SERVICES INTERNET" IEEE / ACM TRANSACTIONS ON NETWORKING,IEEE INC. NEW YORK,US, vol. 7, no. 5, October 1999 (1999-10), pages 685-697, XP000866661 ISSN: 1063-6692**
• **CLARK D D ET AL: "EXPLICIT ALLOCATION OF BEST-EFFORT PACKET DELIVERY SERVICE" IEEE / ACM TRANSACTIONS ON NETWORKING, US,IEEE INC. NEW YORK, vol. 6, no. 4, 1 August 1998 (1998-08-01), pages 362-373, XP000771971 ISSN: 1063-6692**

**Description**

FIELD OF THE INVENTION

This invention relates generally to a method of the pre-characterising part of claim 1 and a corresponding apparatus.

BACKGROUND OF THE INVENTION

In the Internet Engineering Task Force's (IETF) Differentiated Services architecture (S. Blake et al., "An Architecture for Differentiated Services", IETF RFC 2475) for providing IP Quality of Service (QoS), each IP packet carries a Differentiated Services Code-Point (DSCP) for the Differentiated Services (DS) field. DSCP is an index into a list of Per-Hop Behaviors (PHBs) that a packet may be entitled to at each DS-compliant node or router. A PHB may include a probability or preference to drop a packet of a certain class. By obtaining similar PHB at each network node using the DSCP as a tag or marker, an IP flow can realize end-to-end QoS.

In the IETF model, a source sends packets to a network, which may have wireless links. A first-hop router, also known as ISP router, places the appropriate DSCP in the DS field of each packet. If the source sends traffic, comprised of data packets in a flow, according to an agreed contract or policy, the packets are considered "in-profile" and marked with an appropriate DSCP. For example, those packets that are received according to the agreed contract, may be marked with a selected priority level from among several priority levels. Each priority level may have at least one DSCP associated with the priority level such that no DSCP is assigned more than a single priority level. Each of the priority levels denote a drop precedence, or color of packet. A high priority level is less likely to be dropped than a lower priority level. A subordinate priority level is any priority level that is not the highest priority level.

In the Three Color Marker (TCM) model (see J. Heinanen and R. Guerin, "A Two Rate Three Color Marker", Internet Draft, May 1999), a packet marked with a priority level of green is least likely to be dropped at a router, as compared to packets marked with priority levels of yellow or red. In the TCM model, the highest priority level is green. Red and yellow are subordinate priority levels. Thus it is advantageous in a network of network entities or routers that use multiple priority marked packets, e.g. a three colour marker. TCM for a user to have as many data packets in a flow marked green as possible, at least from the point of view of that user.

Unfortunately, since the resources at each router, and of the network generally, are limited, what is good for a single user, may have a negative impact on other users. If a single user monopolized the entire buffer queue at a router, that would leave the router unavailable to other users who intend to use the router. Marking a preponderance of data packets of a first user green, while marking a minority of data packets of a second user as green, would have a similar, but less pronounced effect. In that situation, a smaller percentage of the first user's packets would be dropped, (since green is low drop probability) as compared to the packets of the second user, which has a greater percentage of packets marked with the inferior priority levels of red and yellow.

Fairness is a measure of proportionally marking packets (with different colors corresponding to different packet-drop precedences) originating from a user of a customer consuming some bandwidth X, wherein the proportion of packets marked for the user of the customer is as dose as possible to the proportion of packets marked of a second user of the customer, even though the second user may currently consume a bandwidth different than X. Necessarily, the proportion of packets marked, is a measure of the number of packets from a user marked over a period of time, compared to the overall set of packets of that user being considered for marking over the same period of time.

TCM tends to permit high priority marking proportions to vary considerably between users of a common customer, when compared at the same time. Such a disparity can lead to dissatisfaction of users, not entirely unlike that experienced by motorists who encounter a traffic jam.

Feng W-C et al, "Adaptive Packet Marking for Maintaining End-to-End Throughput in a Differentiated-Services Internet" IEEE/ACM Transactions on Networking, Vol. 7, No. 5, Oct. 99 p 685-697 describes a method having the pre-characterising features of claim 1.

A method according to the present invention is provided in claim 1 appended hereto.

An apparatus according to the present invention is provided in claim 15 appended hereto.

A method of transmitting data on a network achieves greater fairness between packet flows from different sources. The proportion of packets to be marked a priority level, may be determined, in part, by a rate threshold.

An ability to establish a credit for good behavior, such as underutilized capacity, is achieved. The credit permits occasional bursts of packets above a threshold while the credit continues to satisfy a criterion. Such credits may be shared among several packet flows.

A further object of the invention is a means to adjust a probability of selecting a priority level on the basis of weighting multiple factors. This may enable a network operator to adjust between a preference for short duration adherence to a rule, and a preference for long duration adherence to a rule.

According to an embodiment of the invention, packets from a source reach a router. The router determines a sending rate estimate. The packet is then marked with a priority level based on the sending rate estimate.

The embodiment of the invention, may be operated in a diffserv or other network environment where one or more users, bargains with a ISP for carriage of packets over the network. The bargain struck results in setting parameters or rate thresholds to govern the rates of packets originating from a customer domain, wherein the one or more users may transmit packets from within IP addresses of the customer domain. Each user may have one or more IP flows associated with the user. An IP flow may be characterized by the source IP address, the destination IP address, the port numbers and the protocol id. Similar parameters may be used if the flow is an IPv6 flow. The sum of the packets of all users of a customer is known as the aggregate flow, or just 'aggregate'. An example of a customer would be Nokia Corporation. Another example would be a campus at a university, wherein the users may include faculty, staff and students. In the end, the customer may be regarded as a collective that has bargained for certain packet transmission qualities, and in particular, for rates of transmission and packet-drop probability. A user in this context is anyone who is apparently authorized to operate the equipment within the customer's domain that generates a flow.

A packet marker embodiment, known as a Random Packet Marker (RPM) marks packets on a flow-aggregate or aggregate basis rather than on per-flow basis. The marking is done as a function of the packet sending rate of the aggregate with respect to at least one rate threshold, e.g. a Committed information Rate (CIR), established by prior agreement between the customer and the ISP. When the sending rate is at or below the CIR, all packets are sent as green; when it diverges from CIR, the probability of a packet being marked as green decreases, while the probability of being marked as yellow or red or other lower priority increases. A super rate threshold is one that is higher than at least one other rate threshold.

In comparison to TCM, testing shows that RPM provides a greater level of fairness across multiple flows, wherein fairness may be measured as the standard deviation of the proportion of packets marked green among the multiple flows.

## BRIEF DESCRIPTION OF THE DRAWINGS

Fig. 1 is a block diagram of data flows traveling over links to a router according to an embodiment of the invention;
Fig. 2 is proportionality diagram showing the relative proportions of color markings of packets under varying rate multiples of the Committed Information Rate (CIR) according to an embodiment of the invention;
Fig. 3 is proportionality diagram showing the relative proportions of color markings of packets under varying rate multiples of the Committed Information Rate (CIR) according to another embodiment of the invention;
Fig. 4 is a simulation model for generating simulated results of an embodiment of the invention;
Fig. 5 is a comparison of a window length to a packet duration of a Time Sliding Window (TSW);
Fig. 6 is a proportionality diagram of a simulation of packet marking for a single TCP source;
Fig. 7 is a proportionality diagram of a simulation of a packet marking for six TCP sources using an embodiment of the invention; and
Fig. 8 is a proportionality diagram of simulated result of a packet marking for six TCP sources using a prior art method and apparatus.

Fig. 9 is a proportionality diagram of a simulated result of a packet marking for a single TCP source using another embodiment of the invention.

## DETAILED DESCRIPTION OF THE INVENTION

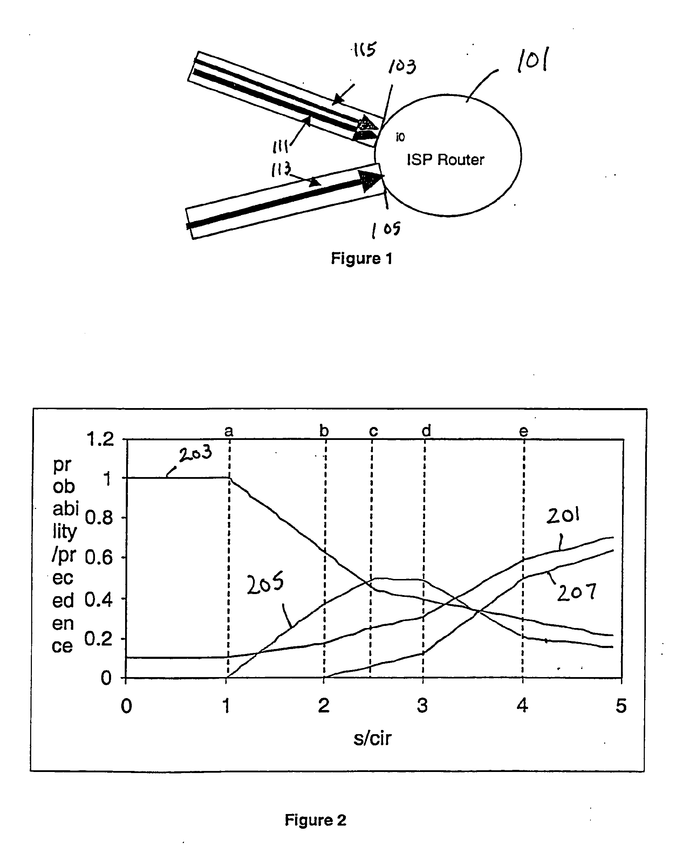

An embodiment of the Invention is shown in Figure 1. An ISP router **101**, operated by an internet service provider (ISP), may have multiple input interfaces belonging to different customers, e.g. input interface i0 **103** and input Interface i1 **105.** For example, an Assured Forwarding (AF) class denoted by flow 111. and flow 113 may be specified to handle a first rate threshold, e.g. a Committed Information. Rate (CIR), of 0.3Mbps, and a second rate threshold, e.g. Peak Information Rate (PIR), of 0.4 Mbps. In this embodiment, PIR is a super rate threshold. Other higher rate thresholds could also be implemented. Expedited Forwarding (EF) class traffic is denoted by flow **115.** The ISP router **101** employing differentiated services has to meter, using methods known in the art, the incoming traffic on the input interface i0 **103,** and mark the packets appropriately based on traffic compliance. The ISP router **101** need not consider whether each flow belonging to a customer is individually traffic compliant; instead, it may consider whether the entire customer traffic, e.g. flow **111** and flow **115,** is compliant to the CIR of the customer and PIR of the customer or not. In such case, it is important to be able to provide per-aggregate marking algorithm in a router so that downstream routers are able to discard packets in accordance with the selected priority level set by a packet marker embodiment of the invention.

The packet marker of an embodiment relies on the availability of sending rate information, typically provided by a meter or metering tool. Such metering tools may include a time sliding window, which provides an estimate of sending rates, for example the aggregate sending rate of a customer, sometimes called s.

An embodiment of the invention, called random packet marking (RPM) may operate according to the following rules, wherein green, yellow and red denote unique DSCP bit patterns available to be set in a data packet, and the probabilities are for individual packets, based on rates determined by, e.g. Time Sliding Window (TSW):

Green marking probability equals:

1 if s <= CIR, and

CIR/s otherwise.

Yellow marking probability equals:

0 if s <= CIR;

1 - (CIR / s) if CIR < s <= PIR; and

(PIR - CIR)/s, otherwise.

Red marking probability equals:

0 if s $\Leftarrow$ PIR; and

(s - PIR)/s otherwise.

Fig. 2 is proportionality diagram showing the relative proportions of color markings of packets. The diagram is a proportionality diagram because proportions are measured on the vertical axis. The diagram shows the likelihood of marking a packet for each of the several priority levels according to the previously mentioned embodiment of the invention. The diagram also shows the likelihood of dropping packets 201 by a Differentiated Services (diffserv) router downstream from the marker, so that although the proportions shown for **203, 205,** and **207** are local to the node, **201** is the proportion collectively of packets dropped at one of possibly several nodes. In this example the PIR is set to be twice the CIR. The likelihood of dropping packets is known as the overall drop precedence **201.** It may be calculated by:

$$\text{Overall Drop Precedence} = \text{low} * P_G(x) + \text{medium} * P_Y(x) + \text{high} * P_R(x),$$

where low, medium and high represent numeric probabilities of packet dropping associated with each of the three selected priority levels, and $P_G(x)$ **203,** $P_Y(x)$ **205** and $P_R(x)$, **207** are the probabilities of marking green, yellow and red, respectively.

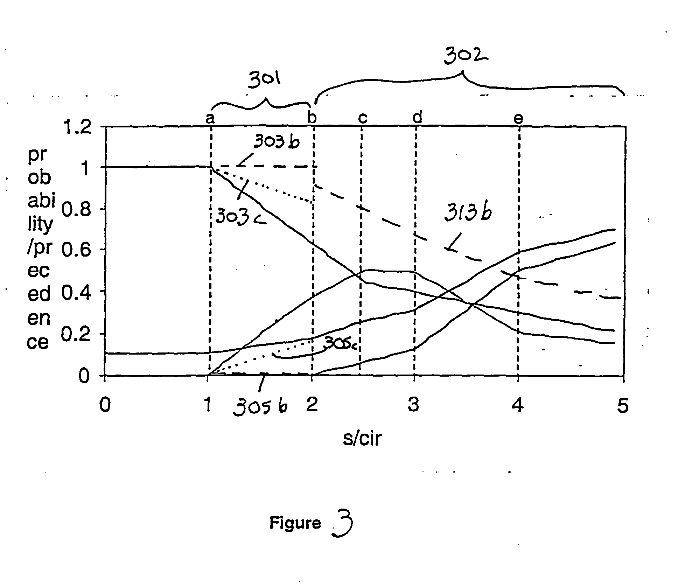

Fig. 3 is a proportionality diagram that shows operation of another embodiment of the invention. The embodiment may permit greater flexibility, by reducing the overall drop precedence of the previously described embodiment. The second embodiment modifies marking rules to bias, or improve the probability of marking green, while there is a sufficiently accumulated burst-size, b, built up for the customer (aggregate) and a first burst criterion **301** is satisfied, e.g. that s> CIR. The first burst criterion may also include a requirement that burst-size, b, is greater than a minimum burst, e.g. that b > 0. By increasing the proportion of packets marked green, the best priority level, the overall drop rate at downstream routers is reduced. The burst-size, b, may be regarded as a credit to a customer for operating at rates below CIR. And like the first embodiment, the burst-size is accumulated for each customer so that flows of the customer are treated with high fairness. The practical effect this has in relation to Fig. 3, is that it increases the probability, to high, of marking a packet green, $P_G(x)$, to a burst-mode probability **303b,** or high, while the burst credit, or burst-size remains above a threshold, e.g. 0. Naturally, if the probability of marking green, $P_G(x)$, is increased during this time, the probability of marking the packet a lower priority level **305b,** e.g. yellow, $P_Y(x)$, must be reduced accordingly so that the sum of the probabilities is 1. An intermediate burst-mode probability $P_G(x)$ **303c** of marking green may be preferred if the ISP does not want to fix the burst-mode probability to 1 for the highest priority level or green. Similarly, the intermediate burst-mode probability for yellow $P_Y(x)$ **305c** may also be used.

If a sending rate satisfies a second burst criterion **302,** the probability of marking green may decline, as sending rate increases, under a secondary function **313b.** The secondary function **313b** according to the second embodiment may be in proportion to the inverse of the sending rate. The secondary function may be selected by a second burst criterion, such as, upon determining that s is as large as or much larger than PIR and burst-size is above a threshold.

Alternatively, the random element may be removed from the decision to mark green, and the packets may be marked green at a rate not exceeding the PIR or some multiple thereof. The selection of the remaining priority levels, e.g. red and yellow, for marking could be based on the probabilities provided under the operation of the first embodiment.

The burst credit may be established at a level, and may be restricted to a range, wherein no bursts are accumulated above the range, and no bursts are deducted below the range. The burst-size may be incremented in a fixed chunk, or variable chunk, and the burst size may be decremented in a fixed chunk or variable chunks. A suitable chunk setting could be the difference between the sending rate (expressed in bits per second) and CIR (expressed in bits per second) multiplied by inter-pkt-time. Inter-pkt-time may be the time measured between packets received. Inter-pkt-time may be a weighted average of times between several packet arrivals. Inter-pkt-time is also known as inter packet spacing. Another suitable chunk setting could be the number of bits in the packet to be marked.

The burst-size may be decremented by a chunk any time one or more of first burst criterion and second burst criterion is satisfied. The burst size may be incremented a chunk any time all burst criteria are not satisfied.

A more specific example of marking a received packet according to the second embodiment follows, using the language of TCM, wherein green is the highest priority level. All references of burst-size; sending rate; CIR; PIR; inter-pkt-time; pkt-size apply to a particular customer.

If the sending rate of the customer associated with the packet, s < CIR, then

mark the packet green and

burst-size = burst-size + (CIR - sending rate) * inter-pkt-time.

If CIR < s < PIR and burst-size > 0, then

mark the packet green; and

burst-size = burst-size - pkt-size.

If sending-rate > PIR and burst-size > 0, then

mark the packet so that it and any prior packet marked green for the customer do not exceed the peak information rate; and

burst-size = burst-size - pkt-size.

The values for (CIR - sending rate) * inter-pkt-time and pkt-size may each operate as a chunk. In order to mark packets green while not exceeding the PIR, a count of packets marked green by the marker may be maintained for an appropriately sized time period, or duration. A count of too many green packets in that period, would prohibit the current packet from being marked green, even though the burst-size, b, is greater than zero.

A convenient measure of a stream of data, is the instantaneous sending rate, which may be determined by a meter. Instantaneous sending rate may be determined by identifying two packets and dividing the data carried in the first packet by the duration between packet arrivals. The instantaneous sending rate may be in relation to packets fitting a certain criteria, such as, e.g. marked as green, in which case it is called the green instantaneous sending rate. The instantaneous sending rate may be a helpful gauge to measure performance of a marker, or of the network in general. In a sense, the instantaneous sending rate is a microscopic view of very few packets at some stage in the process of sending, receiving, metering or marking of packets.

It is possible when using some marking algorithms for the instantaneous sending rate for green packets to be higher than the CIR. Generally, this can occur with a minority of the green packets, but nevertheless the inter-pkt-time, or inter-packet spacing, between two packets may be shorter than an inter-packet spacing derived from the CIR, giving the appearance that a customer is getting a free ride beyond what was bargained for. To strictly prohibit green marked packets from having inter-packet spacing this small (i.e. in violation of the inter-packet spacing set by CIR), a marker could remark those packets marked green by the earlier embodiments. However, a packet marker doing this suffers the problem that averaging the data rate for all packets marked green often results a green rate well under the CIR. An example of this is in the situation where packets uniformly arrive every 8 ms, and minimum spacing, of CIR, is 27 ms. By remarking so that no more than 1 in four consecutive packets are green, the green inter-packet spacing is 32 ms, nearly 25% slower than CIR -- clearly the customer is getting shortchanged when the incoming packets arrive just barely under the inter-packet spacing of CIR.

In order to avoid short-changing the customer, and permit longer term average rates to be closer to the sending rate CIR, a probability of keeping the green packets green using a soft inter-packet spacing step according to an embodiment of the invention would be:

$$P'(green) = \exp((x-1)/a)$$

where x is the instantaneous green sending rate divided by CIR prior to remarking, and the remarking occurs provided the instantaneous green sending rate is larger than CIR. If instantaneous sending rate of two green packets prior to remarking does not satisfy this, then P'(green) = 1.

Soft inter-packet spacing, as generated by the soft inter-packet function, P'(green), can be helpful when data from a customer just starts up. Starting up the flows from the customer causes the aggregate sending rate (s) to fluctuate because no or few packets have arrived upon which to estimate s. At that time, an ISP may want a blend of the RPM, and the soft inter-packet spacing embodiments. In addition, the ISP may want to provide the customers rates according to soft inter-packet function, during times when traffic on the ISP is operating well below capacity, i.e. during off-peak hours.

The probabilities produced by the two embodiments -- a first probability in the case of the RPM embodiment, and a second probability in the case of soft inter-packet spacing embodiment -- may be blended together to provide a blended probability by weighting the probability for marking a packet according to each of the embodiments according to table 1.

Table 1

| Duration of use | Embodiment: $P_G$ (RPM) | Embodiment: P'(Soft inter-packet spacing) |
|---|---|---|
| At start-up | .01 weighting | .99 weighting |
| 5 seconds after start-up | .50 | .50 |
| 30 seconds after start-up | .95 | .05 |
| Steady state | 1.00 | 0.00 |

The blended probability, $P_b$, thus becomes:

$$P_b = w * P_G(x) \ + \ (1 - w) * P'(green);$$

where w may range between 0 and 1, and operates to weight each probability algorithm. Such a blend may be helpful to initialize the marking using P'(green) and later shift to $P_G(x)$, i.e. setting w=0 at startup, and shifting to a higher value of w as time passes.

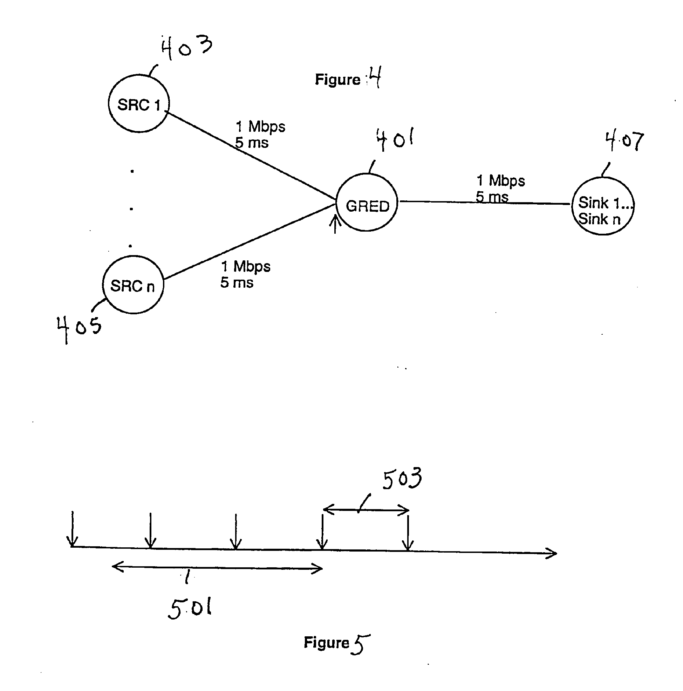

Fig. 4 shows a simulation model that is useful to compare the results of an embodiment with TCM. GRED **401** is a generalized RED, (S. Floyd and V. Jacobson, "Random Early Detection Gateways for Congestion Avoidance", IEEE/ACM Transactions on Networking, August 1993) for handling traffic with multiple drop preferences. Packet source 1 or user 1 **403** provides at least one packet flow. Packet source n or user n **405,** which may be one of several packet sources, also provides at least one packet flow. Sink **407** represents a network entity, e.g. a router or client, that receives the packet flows from packet source **1 403** and packet source n **405.** The metering method used for the simulation is Time Sliding Window (TSW) with Exponential Weighted Moving Average (EWMA). In TSW, the sending rate may be calculated as :

$$curr\_rate = \frac{win\_length * avg\_rate + pkt\_size}{win\_length + pkt\_time}$$

where, in accordance with Fig. 5, win_length **501** is the past time taken into consideration for calculating the current sending rate. The relationship between win_length **501** and pkt_time **503** is shown in Fig. 5. The variable avg_weight, may be initialized at a default value, e.g. 0, and then modified as time goes by to be: avg_rate = (1-w) * curr_rate + w * avg_rate; where w is some suitable weight so that more recent packets influence the value for avg_rate more than older packets.

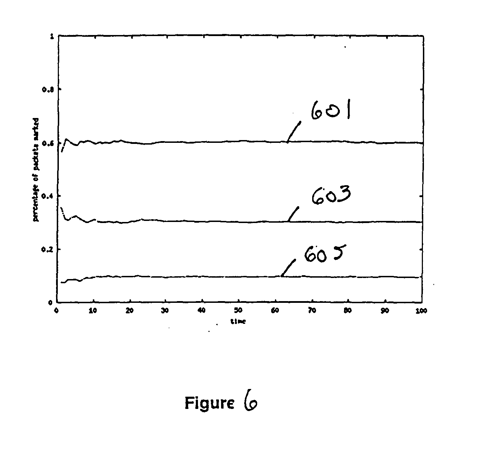

Fig. 6 shows a single TCP flow, broken down into its constituent proportional representation of packets marked red, yellow and green. This kind of graph is a proportionality graph and is helpful to show the fluctuations over time of the proportion of the set of packets that are being marked with each color. One way to calculate the proportion for a given color, is to add up the total packets marked the given color over a duration, say long enough for 20 packets to be marked, then dividing by the total packets of the TCP flow for which there has been an opportunity to mark during that duration. If 3 packets are marked green, during an interval where 20 packets for the flow have been received, then the proportion of packets marked green is 0.15, or 15%. Fig. 6 shows a proportionality diagram of an embodiment of the invention when there is a single TCP source with the parameters mentioned in Fig. 3. The proportions are: the proportion of packets marked red 601; the proportion of packets marked green **603;** and the proportion of packets marked yellow **605.**

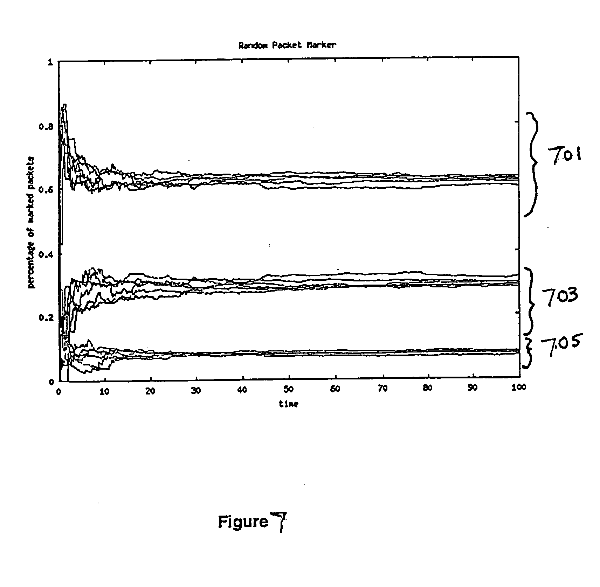

Fig. 7, shows a more complicated simulation - that of packet marking for six TCP flows of a customer using an embodiment of the invention. The proportion of packets marked red for each of the six TCP flows appears in a red group **701,** wherein the proportion is the number of packets marked red as a ratio to the sum of incoming packets of the source. A grouping of six TCP flows marked green **703** are shown each as a proportion of the incoming packets of that TCP flow. A grouping of six TCP flows marked yellow **705** are shown each as a proportion of the incoming packets of that TCP flow.

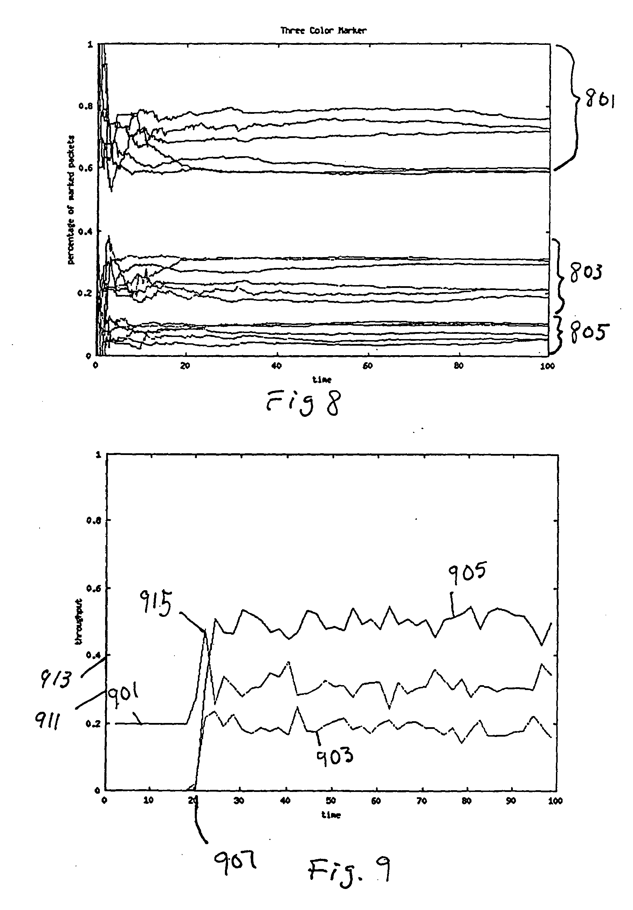

Fig. 8 is a simulated result of a packet marking for six TCP flows using TCM, a prior art method and apparatus. By comparing Fig. 7 to Fig. 8 it can be seen that compared to TCM, the embodiment of the invention offers better fairness to flows. A grouping of six TCP flows marked red **801** are shown each as a proportion of the aggregate of the green, yellow and red marked packets of that TCP flow. A grouping of six TCP flows marked green **803** are shown each as a proportion of the aggregate of the green, yellow and red marked packets of that TCP flow. A grouping of six TCP flows marked yellow **805** are shown each as a proportion of the aggregate of the green, yellow and red marked packets of that TCP flow.

Fig. 9 shows a simulation of how a packet burst can be supported by the second embodiment of the invention when the sending rate of a single Constant Bit Rate connection or user is increased from 0.2 Mbps to 1.0 Mbps at time **907.** CIR **911** and PIR **913** are 0.3 Mbps and 0.4 Mbps respectively as before. The throughput of green marked packets **901,** the throughput of yellow marked packets **903,** and the throughput of red marked packets **905,** is shown.

The second embodiment allows the connection or user to use green packets until a burst size is decremented to a level, and then marks the remaining packets based on the CIR and PIR values. Accordingly, a peak green rate occurs **915** that surpasses the CIR and PIR.

Although the invention has been described in the context of particular embodiments, it will be realized that a number of modifications to these teachings may occur to one skilled in the art. A number of metering methods in addition to TSW may be used. Thus, while the invention has been particularly shown and described with respect to specific embodiments thereof, it will be understood by those skilled in the art that changes in form and configuration may be made therein without departing from the scope of the invention.

## Claims

1.  A method of marking a packet stream including a plurality of data packets from a source, the method comprising the steps of:

    determining a sending rate estimate (s); and
    probabilistically marking the packet stream to one of a plurality of priority levels based on the sending rate estimate; **characterised by**
    determining burst credits or burst debits for the packet stream, wherein the marking of the packet stream is such that the probability of the packet stream being dropped is reduced while there is a sufficiently accumulated burst credit and when a first burst criterion is met.

2.  The method of claim 1 wherein the step of marking comprises the steps of:

    determining if the sending rate estimate is less than a first rate threshold; and
    in response to a determination that the sending rate estimate is less than the first rate threshold, setting a probability of marking at least one data packet with a first selected priority level that is one of the plurality of priority levels.

3.  The method of claim 2 further comprising the step of:

    in response to a determination that the rate estimate is less than the first rate threshold, incrementing a burst size.

4.  The method of claim 1 wherein the step of marking comprises the steps of:

    determining if the sending rate estimate is between a first rate threshold (FRT) and a second rate threshold (SRT); and
    in response to a determination that the sending rate estimate is between a first rate threshold and a second rate threshold, setting a probability of marking a data packet with a subordinate priority level based on the rate estimate.

5. The method of claim 1 wherein the step of marking comprises the steps of:

determining if the sending rate estimate is between a first rate threshold (FRT) and a second rate threshold; and
in response to a determination that the sending rate is between a first rate threshold and a second rate threshold (SRT), marking a data packet such that a rate of packets marked a subordinate priority level is no greater than 1 - (FRT/s).

6. The method of claim 1 wherein the step of marking comprises the steps of:

determining if the sending rate estimate is above a second rate threshold (SRT); and
in response to a determination that the sending rate estimate is above the SRT, marking the packet such that a rate of packets marked the second priority level is at least (SRT - FRT)/s.

7. The method of claim 6 further comprises the step of:

in response to a determination that the sending rate is above the SRT, marking the packet such that a rate of packets marked at the lowest priority level is at least (s-SRT)/s.

8. The method of claim 1 further comprising the steps of:

determining if the sending rate estimate is greater than a rate threshold;
in response to a determination that the sending rate estimate is greater than the rate threshold, determining if a burst size is greater than a minimum burst; and
in response to a determination that the burst size is greater than the minimum burst, marking the packet at a first priority level.

9. The method of claim 8 further comprising the step of:

in response to a determination that the burst size is greater than the minimum burst, decrementing the burst size.

10. The method of claim 1 further comprising the steps of:

determining if the sending rate estimate is greater than the super rate threshold,
determining if a burst size is greater than a minimum burst; and in response to a determination that the burst size is greater than a minimum burst, marking the packet at a priority level based on a count of packets marked at the highest priority level during a period.

11. The method of claim 10 further comprising the step of:

in response to a determination that the burst size is greater than the minimum burst, decrementing the burst size.

12. The method according to claim 1, wherein the step of probabilistically marking the packet stream comprises the steps of:

determining a first probability by using a first algorithm;
determining at least one second probability by using a second algorithm, the first algorithm being different from the second algorithm;
weighting each probability so that each probability contributes to a net probability and
using the net probability to probabilistically mark the packet stream to one of a plurality of priority levels based on the sending rate estimate.

13. The method according to any preceding claim, wherein the first burst criterion is that the sending rate estimate is greater than a committed information rate.

14. The method according to claim 10, wherein the marking of the packet stream comprises a second burst criterion which is that the sending rate estimate is above a peak information rate and the burst-size is above a threshold.

**15.** An apparatus (101) for marking a packet stream including a plurality of data packets from a source comprising:

a means for determining a sending rate estimate (s); and
a means for probabilistically marking the packet stream to one of a plurality of priority levels based on the sending rate estimate;

**characterised by**
a means for determining burst credits or burst debits for the packet stream; and wherein the marking of the packet stream is such that the probability of the packet stream being dropped is reduced while there is a sufficiently accumulated burst credit and when a first criterion is met.

**16.** The apparatus of claim 15 wherein the means for marking comprises:

a means for determining if the sending rate estimate is less than a first rate threshold; and
a means for setting a probability of marking at least one data packet with a first selected priority level to a first value, said means responsive to a determination that the sending rate estimate is less than the first rate threshold, wherein said first selected priority level is one of the plurality of priority levels

**17.** The apparatus of claim 16 further comprises:

a means for incrementing a burst size, in response to a determination that the sending rate estimate is less than the first rate threshold.

**18.** The apparatus of claim 15 wherein the means for marking comprises:

a means for determining if the sending rate estimate is between a first rate threshold (FRT) and a second rate threshold (SRT); and
a means for setting the probability of marking a data packet with a subordinate priority level based on the sending rate estimate, said means responsive to a determination that the sending rate estimate is between a first rate threshold and a second rate threshold.

**19.** The apparatus of claim 15 wherein the means for marking comprises:

a means for determining if the sending rate estimate is between a first rate threshold (FRT) and a second rate threshold (SRT); and
a means for marking a data packet such that a rate of packets marked a subordinate priority level is no greater than $1 - (FRT/s)$ in response to a determination that the sending rate estimate is between a first rate threshold and a second threshold.

**20.** The apparatus of claim 15 wherein the means for marking comprises:

a means for determining if the sending rate estimate is above a second rate threshold (SRT); and
a means for marking the packet such that a rate of packets marked the second priority level is at least $(SRT - FRT)/s$, in response to a determination that the sending rate estimate is above the SRT.

**21.** The apparatus of claim 20 further comprising:

a means for marking the packet such that a rate of packets marked at a lowest priority level is a least $(s-SRT)/s$, in response to a determination that the sending rate is above the SRT.

**22.** The apparatus of claim 15 further comprises;
a means for determining if the sending rate estimate is greater than a rate threshold;
a means for determining if a burst size is greater than a minimum burst, in response to a determination that the sending rate estimate is greater than the rate threshold; and
a means for marking the packet at a first priority level, in response to a determination that the burst size is greater than a minimum burst.

**23.** The apparatus of clam 22 further comprises:

a means for decrementing the burst size, in response to a determination that the burst size is greater than the minimum burst.

24. The apparatus of claim 15 further comprises:

a means for determining if the sending rate estimate is greater than a super rate threshold;
a means for determining if a burst size is greater than a minimum burst, in response to a determination that the sending rate estimate is greater than the super rate threshold; and
a means for marking the packet at a priority level based on a count of packets marked at a highest priority level during a period, in response to a determination that the burst size is greater than a minimum burst.

25. The apparatus of claim 24 further comprising:

a means for decrementing the burst size, in response to a determination that the burst size is greater than the minimum burst.

**Patentansprüche**

1. Markierungsverfahren für einen Paketstrom, der eine Vielzahl von Datenpakete aus einer Quelle enthält, wobei das Verfahren die Schritte umfasst:

Festlegen einer Senderatenschätzung (s); und
probabilistisches Markieren des Paketstroms auf eine von einer Vielzahl von Prioritätsstufen basierend auf der Senderatenschätzung;

**gekennzeichnet durch**
Festlegen von Burst-Haben oder Burst-Soll für den Paketstrom,
wobei das Markieren des Paketstroms derart ist, dass die Wahrscheinlichkeit dafür, dass der Paketstrom verworfen wird, reduziert ist, solange es ausreichend angesammeltes Burst-Haben gibt, und wenn ein erstes Burst-Kriterium erfüllt ist.

2. Verfahren nach Anspruch 1, wobei der Markierungsschritt die Schritte umfasst:

Feststellen, ob die Senderatenschätzung niedriger als eine erste Ratenschwelle ist; und
in Reaktion auf eine Feststellung, dass die Senderatenschätzung niedriger als die erste Ratenschwelle ist, Einstellen einer Wahrscheinlichkeit für ein Markieren wenigstens eines Datenpakets mit einer ersten ausgewählten Prioritätsstufe, die eine der Vielzahl von Prioritätsstufen ist.

3. Verfahren nach Anspruch 2, weiter den Schritt umfassend:

in Reaktion auf ein Feststellen dass die Ratenschätzung niedriger als die erste Ratenschwelle ist, Erhöhen einer Burst-Größe.

4. Verfahren nach Anspruch 1, wobei der Markierungsschritt die Schritte umfasst:

Feststellen, ob die Senderatenschätzung zwischen einer ersten Ratenschwelle (FRT) und einer zweiten Ratenschwelle (SRT) ist; und in Reaktion auf ein Feststellen, dass die Senderatenschätzung zwischen einer ersten Ratenschwelle und einer zweiten Ratenschwelle ist, Einstellen einer Wahrscheinlichkeit für ein Markieren eines Datenpakets mit einer nachrangigen Prioritätsstufe basierend auf der Ratenschätzung.

5. Verfahren nach Anspruch 1. wobei der Markierungsschritt die Schritte umfasst:

Feststellen, ob die Senderatenschätzung zwischen einer ersten Ratenschwelle (FRT) und einer zweiten Ratenschwelle ist; und
in Reaktion auf ein Feststehen, dass die Senderate zwischen einer ersten Ratenschwelle und einer zweiten Ratenschwelle (SRT) ist, Markieren eines Datenpakets derart, dass eine Rate von Paketen, die mit einer nachrangigen Prioritätsstufe markiert sind, nicht größer als 1 - (FRT/s) ist.

**6.** Verfahren nach Anspruch 1, wobei der Markierungsschritt umfasst die Schritte:

Feststellen, ob die Senderatenschätzung über einer zweiten Ratenschwelle (SRT) ist; und
in Reaktion auf ein Feststellen, dass die Senderatenschätzung über der SRT ist, Markieren des Pakets derart, dass eine Rate von Paketen, die mit der zweiten Prioritätsstufe markiert sind, wenigstens (SRT-FRT/s) ist.

**7.** Verfahren nach Anspruch 6, weiter den Schritt umfassend:

in Reaktion auf ein Feststellen, dass die Senderate über der SRT ist, Markieren des Pakets derart, dass eine Rate von Paketen, die mit der niedrigsten Prioritätsstufe markiert sind, wenigstens (S - SRT/s) ist.

**8.** Verfahren nach Anspruch 1, weiter die Schritte umfassend:

Bestimmen, ob die Senderatenschätzung größer als eine Ratenschwelle ist;
in Reaktion auf ein Feststellen, dass die Senderatenschätzung größer als die Ratenschwelle ist, Feststellen, ob eine Burst-Größe größer ist als ein Minimum-Burst; und
in Reaktion auf ein Feststellen, dass die Burst-Größe größer als der Minimum-Burst ist, Markieren des Pakets mit einer ersten Prioritätsstufe.

**9.** Verfahren nach Anspruch 8, weiter den Schritt umfassend:

in Reaktion auf ein Feststellen, dass die Burst-Größe größer als der Minimum-Burst ist, Verringern der Burst-Größe.

**10.** Verfahren nach Anspruch 1, weiter die Schritte umfassend:

Feststellen, ob die Senderatenschätzung größer als die Superratenschwelle ist,
Feststellen, ob eine Burst-Größe größer als ein Minimum-Burst ist; und
in Reaktion auf ein Feststellen, dass die Burst-Größe größer als ein Minimum-Burst ist, Markieren des Pakets mit einer Prioritätsstufe basierend auf einer Zählung von Paketen, die während einer Periode auf der höchsten Prioritätsstufe markiert sind.

**11.** Verfahren nach Anspruch 10, weiter den Schritt umfassend:

in Reaktion auf ein Feststellen, dass die Burst-Größe größer als der Minimum-Burst ist, Verringern der Burst-Größe.

**12.** Verfahren nach Anspruch 1, wobei der Schritt des probabilistischen Markierens des Paketstroms die Schritte umfasst:

Feststellen einer ersten Wahrscheinlichkeit durch Verwenden eines ersten Algorithmus,
Feststellen wenigstens eine zweiten Wahrscheinlichkeit durch Verwenden eines zweiten Algorithmus, wobei der erste Algorithmus unterschiedlich zu dem zweiten Algorithmus ist;
Gewichten jeder Wahrscheinlichkeit derart, dass jede Wahrscheinlichkeit zu einer Netzwahrscheinlichkeit beiträgt; und
Verwenden der Netzwshrscheinlichkeit zum probabilistischen Markieren des Paketstroms mit einer von einer Vielzahl von Prioritätsstufen basierend auf der Senderatenschätzung.

**13.** Verfahren nach einem vorhergehenden Anspruch, wobei das erste Burst-Kriterium darin besteht, dass die Senderatenschätzung größer als eine verbindliche Informationsrate ist.

**14.** Verfahren nach Anspruch 10, wobei das Markieren des Paketstroms ein zweites Burst-Kriterium umfasst, welches darin besteht, dass die Senderatenschätzung über einer Spitzeninformationsrate ist und die Burst-Größe über einer Schwelle ist.

**15.** Vorrichtung (101) zum Markieren eines Paketstroms, der eine Vielzahl von Datenpaketen aus einer Quelle enthält, umfassend:

ein Mittel zum Bestimmen einer Senderatenschätzung (s);

ein Mittel zum probabilistischen Markieren des Paketstroms mit einer von einer Vielzahl von Prioritätsstufen basierend auf der Senderatenschätzung;

**gekennzeichnet durch**

ein Mittel zum Feststellen von Burst-Haben oder Burst-Soll für den Paketstrom; und wobei das Markieren des Paketstroms derart ist, dass die Wahrscheinlichkeit dafür, dass der Paketstrom verworfen wird, reduziert ist, solange es ausreichend angesammeltes Burst-Haben gibt und wenn ein erstes Kriterium erfüllt ist.

**16.** Vorrichtung nach Anspruch 15, wobei die Markierungsmittel umfassen:

ein Mittel zum Feststelle, ob Senderatenschätzung niedriger als eine erste Ratenschwelle ist; und
ein Mittel zum Einstellen einer Wahrscheinlichkeit für das Markieren wenigstens eines Datenpakets mit einer ersten ausgewählten Prioritätsstufe auf einen ersten Wert, wobei die Mittel auf ein Feststellen reagieren, dass die Senderatenschätzung niedriger als die erste Ratenschwelle ist, wobei die erste ausgewählte Prioritätsstufe eine der Vielzahl von Prioritätsstufen ist.

**17.** Vorrichtung nach Anspruch 16 weiter umfassend:

ein Mittel zum Erhöhen einer Burst-Größe, in Reaktion auf ein Feststellen, dass die Senderatenschätzung niedriger als die erste Ratenschwelle ist.

**18.** Vorrichtung nach Anspruch 15, wobei die Markierungsmittel umfassen:

ein Mittel zum Feststellen, ob die Senderatenschätzung zwischen einer ersten Ratenschwelle (FRT) und einer zweiten Ratenschwelle (SRT) ist; und
ein Mittel zum Einstellen der Wahrscheinlichkeit des Markierens eines Datenpakets mit einer nachrangigen Prioritätsstufe basierend auf der Senderatenschätzung, wobei die Mittel auf ein Feststellen reagieren, dass die Senderatenschätzung zwischen einer ersten Ratenschwelle und einer zweiten Ratenschwelle ist.

**19.** Vorrichtung nach Anspruch 15, wobei die Markierungsmittel umfassen:

ein Mittel zum Feststellen, ob die Senderatenschätzung zwischen einer ersten Ratenschwelle (FRT) und einer zweiten Ratenschwelle (SRT) ist; und
einem Mittel zum Markieren eines Datenpakets derart, dass eine Rate von Paketen, die mit einer nachrangigen Prioritätsstufe markiert sind, nicht größer ist als 1 - (FRT/s), in Reaktion auf ein Feststellen, dass die Senderatenschätzung zwischen einer ersten Ratenschwelle und einer zweiten Ratenschwelle ist.

**20.** Vorrichtung nach Anspruch 15, wobei die Markierungsmittel umfassen:

ein Mittel zum Feststellen, ob die Senderatenschätzung über einer zweiten Ratenschwelle (SRT) ist; und
einem Mittel zum Markieren des Pakets derart, dass eine Rate von Paketen, die mit der zweiten Prioritätsstufe markiert sind, wenigstens (SRT - FRT)/s ist, in Reaktion auf ein Feststellen, dass die Senderatenschätzung über der SRT ist.

**21.** Vorrichtung nach Anspruch 20, weiter umfassend:

ein Mittel zum Markieren des Pakets derart, dass eine Rate von Paketen, die mit einer niedrigsten Prioritätsstufe markiert sind, wenigstens (s-SRT)/s ist, in Reaktion auf ein Feststellen, dass die Senderate über dem SRT ist.

**22.** Vorrichtung nach Anspruch 15, weiter umfassend:

ein Mittel zum Feststellen, ob die Senderatenschätzung größer als ein Ratenschwelle ist;
ein Mittel zum Feststellen, ob eine Burst-Größe größer als ein Minimum-Burst ist, in Reaktion auf ein Feststellen, dass die Senderatenschätzung größer als der Ratenschwelle ist; und
ein Mittel zum Markieren des Pakets mit einer ersten Prioritätsstufe, in Reaktion auf ein Feststellen, dass die Burst-Größe größer als ein Minimum-Burst ist.

**23.** Vorrichtung nach Anspruch 22, weiter umfassend:

einem Mittel zum Verringern der Burst-Größe, in Reaktion auf ein Feststellen, dass die Burst-Größe größer als der Minimum-Burst ist.

**24.** Vorrichtung nach Anspruch 15, weiter umfassend:

ein Mittel zum Feststellen, ob die Senderatenschätzung größer als ein Super-Ratenschwelle ist;
ein Mittel zum Feststellen, ob eine Burst-Größe größer als ein Minimum-Burst ist, in Reaktion auf ein Feststellen, dass die Senderatenschätzung größer als die Super-Ratenschwelle ist; und
ein Mittel zum Markieren des Pakets mit einer Prioritätsstufe basierend auf einer Zählung von Paketen, die während einer Periode auf einer höchsten Prioritätsstufe markiert sind, in Reaktion auf ein Feststellen, dass die Burst-Größe größer als ein Minimum-Burst ist.

**25.** Vorrichtung nach Anspruch weiter umfassend:

ein Mittel zum Verringern der Burst-Größe, in Reaktion auf ein Feststellen, dass die Burst-Größe größer als der Minimum-Burst ist.

**Revendications**

**1.** Procédé de marquage d'un flux de données en paquets comprenant une pluralité de paquets de données provenant d'une source, le procédé comprenant les étapes consistant à :

déterminer une ou des estimation(s) de la vitesse d'envoi ; et
marquer de manière probabiliste le flux de données en paquets sur l'un d'une pluralité de niveaux de priorité sur la base de l'estimation de la vitesse d'envoi ; **caractérisé en ce que**
la détermination de crédits par salves ou de débits par salves pour le flux de données en paquets, dans lequel le marquage du flux de données en paquets est de telle sorte que la probabilité que le flux de données en paquets soit abandonné soit réduite tant qu'il y a un crédit par salves suffisamment accumulé et lorsqu'un premier critère de salve est satisfait.

**2.** Procédé selon la revendication 1 dans lequel l'étape de marquage comprend les étapes consistant à :

déterminer si l'estimation de la vitesse d'envoi est inférieure à un premier seuil de la vitesse ; et
en réponse à une détermination que l'estimation de la vitesse d'envoi est inférieure au premier seuil de la vitesse, établir une probabilité de marquage d'au moins un paquet de données avec un premier niveau de priorité sélectionné qui est l'un de la pluralité de niveaux de priorité.

**3.** Procédé selon la revendication 2 comprenant en outre l'étape consistant à :

en réponse à une détermination, l'estimation de la vitesse est inférieure au premier seuil de la vitesse, augmenter une taille de salve.

**4.** Procédé selon la revendication 1 dans lequel l'étape de marquage comprend les étapes consistant à :

déterminer si l'estimation de la vitesse d'envoi est entre un premier seuil de la vitesse (FRT) et un deuxième seuil de la vitesse (SRT) ; et
en réponse à une détermination que l'estimation de la vitesse d'envoi est entre un premier seuil de la vitesse et un deuxième seuil de la vitesse, établir une probabilité de marquage d'un paquet de données avec un niveau de priorité subordonné sur la base de l'estimation de la vitesse.

**5.** Procédé selon la revendication 1 dans lequel l'étape de marquage comprend les étapes consistant à :

déterminer si l'estimation de la vitesse d'envoi est comprise entre un premier seuil de la vitesse (FRT) et un deuxième seuil de la vitesse ; et
en réponse à une détermination que la vitesse d'envoi est comprise entre un premier seuil de la vitesse et un deuxième seuil de la vitesse (SRT), marquer un paquet de données de telle sorte qu'une vitesse des paquets marqués à un niveau de priorité subordonné ne soit pas supérieure à 1 - (FRT/s).

**6.** Procédé selon la revendication 1 dans lequel l'étape de marquage comprend les étapes consistant à :

déterminer si l'estimation de la vitesse d'envoi se situe au-dessus d'un deuxième seuil de la vitesse (SRT) ; et
en réponse à une détermination que l'estimation de la vitesse d'envoi est au-dessus du SRT, marquer le paquet de telle sorte qu'une vitesse des paquets marqués au deuxième niveau de priorité soit au moins (SRT - FRT)/s.

**7.** Procédé selon la revendication 6 qui comprend en outre l'étape consistant à :

en réponse à une détermination que la vitesse d'envoi est au-dessus du SRT, marquer le paquet de telle sorte qu'une vitesse des paquets marqués au niveau de priorité le plus inférieur soit au moins (s - SRT)/s.

**8.** Procédé selon la revendication 1 comprenant en outre les étapes consistant à :

déterminer si l'estimation de la vitesse d'envoi est supérieure à un seuil de la vitesse ;
en réponse à une détermination que l'estimation de la vitesse d'envoi est supérieure au seuil de la vitesse, déterminer si une taille de salve est supérieure à une salve minimum ; et
en réponse à une détermination que la taille de salve est supérieure à la salve minimum, marquer le paquet à un premier niveau de priorité.

**9.** Procédé selon la revendication 8 comprenant en outre l'étape consistant à :

en réponse à une détermination que la taille de salve est supérieure à la salve minimum, diminuer la taille de salve.

**10.** Procédé selon la revendication 1 comprenant en outre les étapes consistant à :

déterminer si l'estimation de la vitesse d'envoi est supérieure au super seuil de la vitesse,
déterminer si une taille de salve est supérieure à une salve minimum, et en réponse à une détermination que la taille de salve est supérieure à une salve minimum, marquer le paquet à un niveau de priorité sur la base d'un compte des paquets marqués au niveau de priorité le plus élevé pendant une période.

**11.** Procédé selon la revendication 10 comprenant en outre l'étape consistant à :

en réponse à une détermination que la taille de salve est supérieure à la salve minimum, diminuer la taille de salve.

**12.** Procédé selon la revendication 1, dans lequel l'étape de marquage de manière probabiliste du flux de données en paquets comprend les étapes consistant à :

déterminer une première probabilité en utilisant un premier algorithme ;
déterminer au moins une deuxième probabilité en utilisant un deuxième algorithme, le premier algorithme étant différent du deuxième algorithme ;
pondérer chaque probabilité de sorte que chaque probabilité contribue à une probabilité nette et
utiliser la probabilité nette pour marquer de manière probabiliste le flux de données en paquets sur l'un d'une pluralité de niveaux de priorité sur la base de l'estimation de la vitesse d'envoi.

**13.** Procédé selon l'une quelconque des revendications précédentes, dans lequel le premier critère de salve est que l'estimation de la vitesse d'envoi est supérieure à une vitesse d'information commise.

**14.** Procédé selon la revendication 10, dans lequel le marquage du flux de données en paquets comprend un deuxième critère de salve qui est que l'estimation de la vitesse d'envoi est au-dessus d'une vitesse d'information maximum et que la taille de salve est au-dessus d'un seuil.

**15.** Appareil (101) pour marquer un flux de données en paquets comprenant une pluralité de paquets de données provenant d'une source comprenant :

un moyen pour déterminer une ou des estimation(s) de la vitesse d'envoi ; et
un moyen pour marquer de manière probabiliste le flux de données en paquets sur l'un d'une pluralité de niveaux de priorité sur la base de l'estimation de la vitesse d'envoi ;

**caractérisé en ce que**

un moyen pour déterminer des crédits de salve ou des débits de salve pour le flux de données en paquets ; et dans lequel le marquage du flux de données en paquets est de telle sorte que la probabilité que le flux de données en paquets soit abandonné soit réduite tant qu'il y a un crédit de salve suffisamment accumulé et lorsqu'un premier critère est satisfait.

16. Appareil selon la revendication 15 dans lequel le moyen pour marquer comprend :

un moyen pour déterminer si l'estimation de la vitesse d'envoi est inférieure à un premier seuil de la vitesse ; et un moyen pour établir une probabilité de marquage d'au moins un paquet de données avec un premier niveau de priorité sélectionné sur une première valeur, ledit moyen répondant à une détermination que l'estimation de la vitesse d'envoi est inférieure au premier seuil de la vitesse, dans lequel ledit premier niveau de priorité sélectionné est l'un de la pluralité de niveaux de priorité.

17. Appareil selon la revendication 16 qui comprend en outre :

un moyen pour augmenter la taille de salve, en réponse à une détermination que l'estimation de la vitesse d'envoi est inférieure au premier seuil de la vitesse.

18. Appareil selon la revendication 15 dans lequel le moyen pour marquer comprend :

un moyen pour déterminer si l'estimation de la vitesse d'envoi est entre un premier seuil de la vitesse (FRT) et un deuxième seuil de la vitesse (SRT) ; et un moyen pour établir la probabilité de marquage d'un paquet de données avec un niveau de priorité subordonné sur la base de l'estimation de la vitesse d'envoi, ledit moyen répondant à une détermination que l'estimation de la vitesse d'envoi est entre un premier seuil de la vitesse et un deuxième seuil de la vitesse.

19. Appareil selon la revendication 15 dans lequel le moyen pour marquer comprend :

un moyen pour déterminer si l'estimation de la vitesse d'envoi est entre un premier seuil de la vitesse (FRT) et un deuxième seuil de la vitesse (SRT) ; et et un moyen pour marquer un paquet de données de telle sorte qu'une vitesse des paquets marqués à un niveau de priorité subordonné ne soit pas supérieure à 1 - (FRT/s) en réponse à une détermination que l'estimation de la vitesse d'envoi est entre un premier seuil de la vitesse et un deuxième seuil de la vitesse.

20. Appareil selon la revendication 15 dans lequel le moyen pour marquer comprend :

un moyen pour déterminer si l'estimation de la vitesse d'envoi est au-dessus d'un deuxième seuil de la vitesse (SRT) ; et un moyen pour marquer le paquet de telle sorte qu'une vitesse des paquets marqués au deuxième niveau de priorité soit au moins (SRT - FRT)/s, en réponse à une détermination que l'estimation de la vitesse d'envoi est au-dessus du SRT.

21. Appareil selon la revendication 20 comprenant en outre :

un moyen pour marquer le paquet de telle sorte qu'une vitesse des paquets marqués à un niveau de priorité le plus inférieur soit au moins (s - SRT)/s, en réponse à une détermination que la vitesse d'envoi est au-dessus du SRT.

22. Appareil selon la revendication 15 qui comprend en outre :

un moyen pour déterminer si l'estimation de la vitesse d'envoi est supérieure à un seuil de la vitesse ; un moyen pour déterminer si une taille de salve est supérieure à une salve minimum, en réponse à une détermination que l'estimation de la vitesse d'envoi est supérieure au seuil la vitesse ; et un moyen pour marquer le paquet à un premier niveau de priorité, en réponse à une détermination que la vitesse de salve est supérieure à une salve minimum.

23. Appareil selon la revendication 22 qui comprend en outre :

un moyen pour diminuer la taille de salve, en réponse à une détermination que la taille de salve est supérieure à la salve minimum.

24. Appareil selon la revendication 15 qui comprend en outre :

un moyen pour déterminer si l'estimation de la vitesse d'envoi est supérieure à un super seuil de la vitesse ;
un moyen pour déterminer si une taille de salve est supérieure à une salve minimum, en réponse à détermination que l'estimation de la vitesse d'envoi est supérieure au super seuil de la vitesse ; et
un moyen pour marquer le paquet à un niveau de priorité sur la base d'un compte des paquets marqués au niveau de priorité le plus élevé pendant une période, en réponse à une détermination que la taille de salve est supérieure à une salve minimum.

25. Appareil selon la revendication 24 comprenant en outre :

un moyen pour diminuer la taille de salve, en réponse à une détermination que la taille de salve est supérieure à la salve minimum.

Figure 1

Figure 2

Figure 3

403

Figure 4

401

407

SRC 1

1 Mbps
5 ms

GRED

1 Mbps
5 ms

Sink 1...
Sink n

.
.
.

SRC n

1 Mbps
5 ms

405

503

501

Figure 5

Figure 6

Figure 7

EP 1 222 781 B1

Three Color Marker

Fig 8

Fig. 9

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. BLAKE et al.** An Architecture for Differentiated Services. *IETF RFC,* 2475
- **J. HEINANEN ; R. GUERIN.** A Two Rate Three Color Marker. *Internet Draft,* May 1999
- **FENG W-C et al.** Adaptive Packet Marking for Maintaining End-to-End Throughput in a Differentiated-Services Internet. *IEEE/ACM Transactions on Networking,* October 1999, vol. 7 (5), 685-697
- **S. FLOYD ; V. JACOBSON.** Random Early Detection Gateways for Congestion Avoidance. *IEEE/ACM Transactions on Networking,* August 1993